# EUROPEAN PATENT SPECIFICATION

(11) **EP 1 374 699 B1**
(45) Date of publication and mention of the grant of the patent: **25.04.2007**
(21) Application number: 02707143.0
(22) Date of filing: 25.03.2002
(51) Int. Cl.: A23L 1/00, A23L 1/325, A23L 1/317, A23J 3/06, A23L 1/03, A23L 1/315, A23L 1/0562, A23L 1/31

(54) **ENZYME PREPARATIONS FOR BONDING AND PROCESS FOR PRODUCING BONDED AND MOLDED FOODS**
ALS BINDEMITTEL DIENENDE ENZYMPRÄPARATE SOWIE VERFAHREN ZUR HERSTELLUNG VON GEBUNDENEN, GEFORMTEN NAHRUNGSMITTELN
PREPARATIONS D'ENZYMES DE LIAISON ET PROCESSUS DE PRODUCTION D'ALIMENTS MOULES ET LIES

(30) Priority: 30.03.2001 JP 2001099906
(43) Date of publication of application: 02.01.2004
(73) Proprietor: Ajinomoto Co., Inc., Tokyo 104-8315 (JP)
(72) Inventor: OOTSUKA, Tomoko, c/o Ajinomoto Co., Inc., Kawasaki-shi, Kanagawa (JP); ISHIDA, Rikiya, c/o Ajinomoto Co., Inc.,, Kawasaki-shi, Kanagawa (JP); KUMAZAWA, Yoshiyuki, c/o Ajinomoto Co., Inc.,, Kawasaki-shi, Kanagawa (JP); KANEKO, Tomoko, c/o Ajinomoto Co., Inc.,, Kawasaki-shi, Kanagawa 2 (JP); NAKAGOSHI, Hiroyuki, c/o Ajinomoto Co., Inc.,, Kawasaki-shi, Kanagawa 2 (JP); SAKAGUCHI, Shoji, c/o Ajinomoto Co., Inc.,, Kawasaki-shi, Kanagawa 2 (JP)
(74) Representative: Strehl Schübel-Hopf & Partner
(86) International application number: PCT/JP2002/002840
(87) International publication number: WO 2002/080700

(56) References cited:
- EP-A2- 0 815 742
- JP-A- 6 225 729
- JP-A- 6 261 712
- TAYLOR M M ET AL: "ENZYMATIC MODIFICATION OF HYDROLYSIS PRODUCTS FROM COLLAGEN USING A MICROBIAL TRANSGLUTAMINASE. I. PHYSICAL PROPERTIES" JOURNAL OF THE AMERICAN LEATHER CHEMISTS ASSOCIATION, AMERICAN LEATHER CHEMISTS ASSOCIATION, EASTON, PA, US, vol. 96, 2001, pages 319-332, XP001052637 ISSN: 0002-9726
- JANSSEN A G W: "Marktvertrouwen in vleeshechter groeit" VOEDINGSMIDDELEN TECHNOLOGIE, NOORDERVLIET B.V. ZEIST, NL, vol. 29, no. 14/15, 11 July 1996 (1996-07-11), page 31, XP002101383 ISSN: 0042-7934

## Description

### TECHNICAL FIELD

The present invention relates to an enzyme preparation for binding solid food raw materials which utilizes a transglutaminase, and a collagen in which the total of the residues of the hydroxyproline and proline in the collagen is less than 20% of the total of the amino acid residues in the collagen or/and a collagen having an average particle diameter of smaller than 600 µm; a bound food produced from solid food materials by use of the said (enzyme) preparation for binding; and a method for producing the same.

### BACKGROUND ART

A conventional method for binding solid food materials by utilizing an enzyme is exemplified by the following six representative methods. The problems of the methods will be also discussed.
(1) Japanese Patent Application Laid-Open (Kokai) No. 79956/1990 discloses a technique for producing a bound food by sole use of a transglutaminase. However, since sufficient binding strength cannot be obtained, use of a transglutaminase in combination with various components has been studied and actually used.
For example, in (2) WO95/08274, a method for binding raw meat by concurrent use of a transglutaminase with an alkali metal phosphate and sodium chloride, is disclosed. However, according to this method, it is essential to add an alkali metal phosphate in an amount of not larger than 0.4 wt% and sodium chloride in a large amount of as much as 1.5 to 4 wt% based on the weight of the meat, so that a product lacking in the intrinsic taste and flavor of the meat is obtained disadvantageously.
Further, in (3) Japanese Patent Application Laid-Opens (Kokai) Nos. 284867/1994 and 140594/1996 is disclosed a binding method using a combination of a transglutaminase with a casein as a substrate of the transglutaminase. This method is applicable to a wide variety of food materials including not only animal meats such as beef, pork and the like but also fishes and seafoods such as fish meat, squid and crab and fish roes such as salmon roe, herring roe, salted salmon roe, cod roe, and the like. Further, this method is capable of binding food materials. Thus, the binding method and an enzyme preparation for binding which are highly versatile and cause no influences on tastes and flavors, are provided.
   Meanwhile, binding methods using combinations of a transglutaminase and a protein other than caseins are also under study.
(4) Japanese Patent Application Laid-Open (Kokai) No. 107923/1997 discloses a method for producing a bound food by use of a gelatin and a transglutaminase. However, although an aqueous 5 to 15% gelatin solution disclosed in the patent document can reform fish boiled in soy sauce, fish roe, or the like, it cannot bind satisfactorily animal and fish meats which are targets of the present invention.

Further, in the reports made by Kuraishi et al. and Tseng. T-F. et al., it is described that when a protein separated from soybean (soy protein isolate), a milk whey protein, a gelatin or the like, other than sodium caseinate is used as a protein to be used together with a transglutaminase, sufficient binding strength cannot be obtained (J. Food. Sci., 1997, 62(3), 488-490 and Zhonghua Nongxua Huibao, 2000, 1 (1), 108-117), and therefore, caseins have been found to be an essential component for practical binding.

However, in recent years, due to those problems such as food allergy and the like, there are some cases where proteins derived from milk are not permitted to be used in processed foods. In particular, it is known that out of the milk proteins, caseins are substances causing the food allergy. Thus, a technique providing high binding strength without concurrent use of caseins, has been in great demand.

Under such a technical background, (6) Japanese Patent Application Laid-Open (Kokai) No. 070961/1998 discloses a binding method using an enzyme preparation for binding comprising a collagen, not a casein, and a transglutaminase as the active ingredient. However, when this collagen is dissolved in hot water, it exhibits poor dispersibility and high viscosity, so that it is hardly mixed with solid food materials to be added therewith. Therefore, according to the invention disclosed in the Japanese Patent Application Laid-Open (Kokai) No. 070961/1998, there remains a problem in terms of workability because the collagen must be dissolved in cold water of not higher than 10°C and a binding operation must be performed immediately after the dissolution of the collagen in water. Further, the binding strength is very poor without concurrent use of a salt, and in that case, a practical effect cannot be expected.

### DISCLOSURE OF THE INVENTION

Under such a technical background, a powerful enzyme preparation for binding which is capable of binding solid food materials such as pieces of meat or the like, sufficiently without concurrent use of a casein and having excellent operability, and a method of producing a bound food by use of such an enzyme preparation have been in demand in the processed food industry. And, it is an object of the present invention to meet such a demand.

The present inventors have made intensive and extensive studies so as to achieve the above object. As a result, they have found that solid food materials can be bound easily and firmly by use of a specific collagen and have completed the present invention based on these findings.

Accordingly, the present invention relates to an enzyme preparation for binding solid food materials which comprises, as the active ingredient, a transglutaminase, and (1) a collagen in which the total of the residues of the hydroxyproline and proline (hereinafter, may be referred to collectively as "imino acid") in the collagen is less than 20% of the total of the amino acid residues in the collagen or/and (2) a collagen having an average particle diameter of smaller than 600 µm; a method for producing a bound food from solid food materials by use of (the active ingredient of) the said enzyme preparation for binding; and a bound food produced from solid food materials by such production method.

Hereinafter, the present invention will be described in greater detail.

The present invention is characterized in that in addition to the enzymatic action of a transglutaminase, the above specific collagens are caused to function as the adhesive or binding agent for producing a bound food from solid food materials.

Firstly, transglutaminase to be used according to the present invention will be described.

Transglutaminases are an enzyme which catalyzes the transfer reaction of acyl groups in the γ-carboxyamide groups of glutamine residues present in a protein or peptide chain. When a transglutaminase acts, as an acyl receptor, on the ε-amino groups of lysine residues in a protein, ε-(γ-Glu)-Lys bonds are formed in and between protein molecules. Further, a transglutaminase to be used as an enzyme according to the present invention may be of any origin as long as it has transglutaminase activity, and transglutaminases already known can be used.

As examples of transglutaminases, there may be mentioned those derived from microorganisms such as those derived from actinomicetes (Refer to Japanese Patent No. 2572716), those derived from Bacillus subtilis, those derived from microorganisms (Refer to WO96/06931), those derived from oomycetes (Refer to WO96/22366 and Japanese Patent Application Laid-Open (Kokai) No. 137254/1999), and the like Further, there may be mentioned those derived from the guinea pig liver (Refer to Japanese Patent No. 1689614), those derived from animals such as those derived from bovine blood, swine blood and the like, those derived from fishes such as salmon, red sea bream and the like (Refer to SEKI et al., "Nihon Suisan Gakkaishi", vol. 56, 125-132 (1990)), those derived from an oyster (Refer to US Pat. No. 5736356), and the like. Further, there may be mentioned those produced by gene recombination (Refer to, for example, Japanese Patent Application Laid-Open (Kokai) No. 75876/1999)), and the like.

Any of these transglutaminases can be used, and the origin and production process thereof may not particularly limit the availability of them. From the view points of functionality and easy handling for food use, and also from the commercial view points of possible mass production and inexpensive availability, however, it is preferred to use the above-mentioned transglutaminases derived form micro-organisms (Refer to Japanese Patent No. 2572716, WO96/06931, and WO96/22366).

The activity unit of a transglutaminase to be used according to the present invention is measured and defined, as follows. That is, a reaction is carried out with benzyloxycarbonyl-L-glutaminyl glycine and hydroxylamine being as substrates, and the resulting hydroxamic acid is formed into an iron complex in the presence of trichloroacetic acid. Subsequently, the absorbance at 525 nm is measured, to determine the amount of the resulting hydroxamic acid. The amount of an enzyme, which generates 1 µmol of hydroxamic acid in 1 minute, is defined as an activity unit of the transglutaminase, namely 1 unit. This method (the hydroxamate method) has been reported in greater detail (Refer to, e.g., Japanese Patent No. 2572716 mentioned above).

As already mentioned above, transglutaminases are known to have a variety of origins, and depending on origins, some transglutaminases may have such substrate specificity that the activity thereof cannot be defined by the above hydroxamate method. In such a case, the unit may be defined by a different method. Regardless of what activity measurement methods are used to define the activity, any amount which substantially exhibits a binding effect according to the present invention falls within the range of amounts in which a transglutaminase is added according to the present invention.

Next, collagens, another active ingredient of the enzyme preparation for binding solid food materials according to the present invention, will be described.

A collagen to be used according to the present invention is a collagen in which the content of the imino acid (hydroxyproline and proline) is less than 20% of the total amino acid residues present in the collagen or/and a collagen having an average particle diameter of smaller than 600 µm, the collagen having been extracted from animal tissues such as skins, bones, cartilages, scales, air bladdersor the like, of animals or fishes and seafoods.

When a collagen whose amino acid composition falls within the amino acid composition range defined above and a collagen whose average particle diameter falls within the average particle diameter range defined above are used alone or in combination, a binding effect is significantly improved.

Hereinafter, the collagens will be described in more detail.

One of the limitations on the specific collagens to be used according to the present invention is the content of the imino acid. The content of the imino acid (in terms of the number of the residues) in a collagen derived from an animal meat is often 20 to 22%. Such a collagen is mixed with a collagen having a lower content of the imino acid so as to prepare collagens having different contents of the imino acid, and binding strength was measured for each of the collagens. As a result, a surprising effect that binding strength is significantly improved by use of a collagen having an imino acid content of less than 20%, has been found. Many collagens having a lower content of the imino acid are obtained from fishes and seafoods, and collagens having an imino acid content of less than 20% can be used as they are.

Therefore, collagens which are to exhibit binding strength according to the present invention do not have to be obtained from a single origin. When a collagen of one origin having a high imino acid content is mixed with a collagen of another origin having a low imino acid content and the overall content of the imino acid in the resultant collagen mixture falls within the range defined by the present invention, the collagen mixture can be a collagen according to the present invention. More specifically, a sufficient binding effect can still be obtained even by use of a collagen mixture obtained by mixing a collagen having an imino acid content of higher than 20% with another collagen having an imino acid content of lower than 20% in such a ratio that the resulting mixture may have an overall imino acid content of lower than 20%. Such a collagen mixtre also falls within the category of the collagens of the present invention. Further, those obtained by adjusting collagens extracted from the above animal tissues by a certain chemical, enzymatic or other treatment in such a way that they may have an imino acid content of lower than 20%, also fall within the category of the collagens to be used according to the present invention.

To obtain the above collagen having a preferred amino acid composition, the amino acid composition is measured in the following manner. For example, a method wherein the collagen is first acid-hydrolized and then subjected to liquid chromatography with an adequate column can be employed. Further, as a method for detecting an amino acid, thin-layer chromatography or mass spectrometry can also be used.

The present inventors have used the following method in order to measure the amino acid composition. To be more specific, 1 mL of 6N hydrochloric acid was added to about 3 to 5 mg of a dried sample, and the resulting mixture was deaerated and then heated at 110 ± 1°C for 20 hours so as to completely hydrolyze the sample. After completion of the hydrolysis, the hydrochloric acid was removed by means of an evaporator, and the residue was diluted as appropriate and then analyzed by means of "Amino Acid Automatic Analyzer L-8500" (product of Hitachi Ltd.). As the amino acids, aspartic acid, threonine, serine, glutamic acid, proline, hydroxyproline, glycine, alanine, cysteine, valine, methionine, isoleucine, leucine, tyrosine, phenylalanine, lysine, histidine and arginine were quantified, and the ratio of the total of the proline and hydroxyproline residues to the total of the amino acid residues was determined. That is, data for each amino acid detected in wt% as a result of analysis of the amino acids was divided by the molecular weight thereof so as to calculate a molar ratio, and by use of the molar ratio, the ratio of the total of the proline and hydroxyproline residues to the total of the amino acid residues was determined.

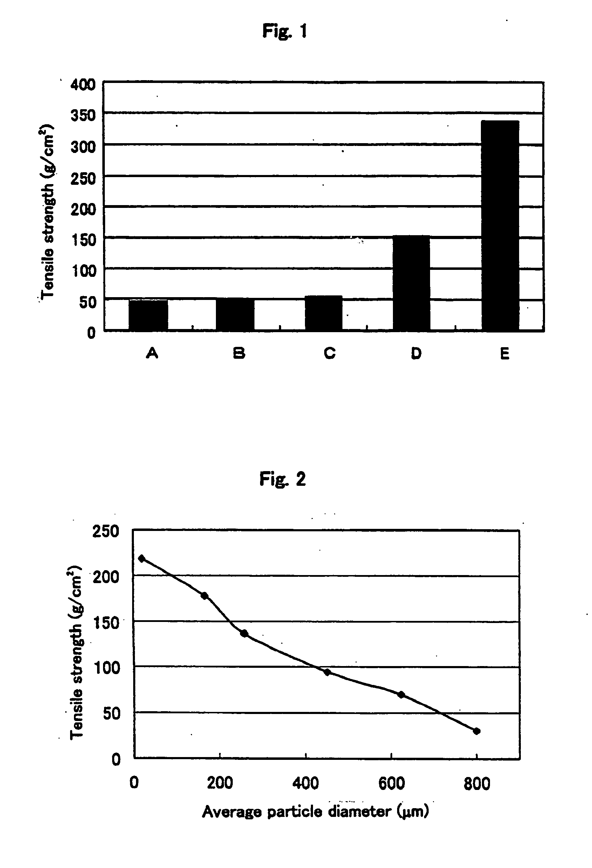

By the above method, five types of collagens A to E were measured for the amino acid composition (the following Table 1), and the relationships between composition and effectiveness in binding were revealed (refer to Fig. 1. About the testing method, refer to Example 1). As a result, it was found that practical binding strength can not be exhibited when a collagen having a high imino acid content is used.

**Table 1**

| | A | B | C | D | E |
|---|---|---|---|---|---|
| Hyp | 9.5 | 9.8 | 9.6 | 5.3 | 5.8 |
| Asp | 4. 8 | 4.6 | 4.6 | 5.1 | 5.3 |
| Thr | 1.7 | 1.8 | 1.8 | 2.4 | 2.4 |
| Ser | 3.6 | 3.3 | 3.3 | 6.3 | 5.0 |
| Glu | 7.3 | 7.2 | 7.3 | 7.2 | 7.5 |
| Pro | 12.2 | 11.9 | 12.6 | 10.4 | 11.1 |
| Gly | 34.2 | 33.5 | 33.8 | 36.0 | 36.0 |
| Ala | 10.4 | 11.1 | 11.3 | 11.1 | 10.9 |
| Cys | 0.0 | 0.0 | 0.0 | 0.2 | 0.3 |
| Val | 2.2 | 2.3 | 2.3 | 1.9 | 1.7 |
| Met | 0.5 | 0.4 | 0.4 | 0.9 | 1.0 |
| Ile | 1.1 | 1.2 | 1.1 | 1.1 | 1.1 |
| Leu | 2.5 | 2.7 | 2.5 | 2.1 | 1.9 |
| Tyr | 0.3 | 0.3 | 0.0 | 0.0 | 0.0 |
| Phe | 1.4 | 1.5 | 1.6 | 1.5 | 1.4 |
| Lys | 2.9 | 2.8 | 2.7 | 2.7 | 2.5 |
| His | 0.6 | 0.5 | 0.4 | 0.9 | 1.0 |
| Arg | 4.8 | 5.1 | 4.8 | 5.2 | 5.2 |
| Total | 100.0 | 100.0 | 100.0 | 100.0 | 100.0 |
| Hyp+Pro(%) | 21.7 | 21.7 | 22.2 | 15.7 | 16.9 |

Another limitation on the specific collagens to be used according to the present invention relates to an average particle diameter. A plurality of collagens having different average particle diameters were prepared and measured for binding strength. As a result, it has been found that a practical binding strength can be obtained by use of a collagen having an average particle diameter of smaller than 600 µm. The average particle diameter referred to here is a particle diameter corresponding to 50% of the cumulative distribution curve of a powder and is also called as a median diameter D_{med} or a 50% diameter D₅₀.

The increase in binding strength resulting from use of the above specific collagen is observed in any method of producing a bound food from solid food materials. However, in a method of producing a bound food wherein a powdery enzyme preparation for binding which comprises a transglutaminase and a collagen as the active ingredient is added directly to solid food materials without dissolving in advance the preparation in water or a liquid material, a practical binding strength can be obtained by use of a collagen having an average particle diameter of smaller than 600 µm. The liquid material refers here to a liquid such as water, oil or the like, or a flowable material obtained by mixing a variety of proteins, seasonings, spices or food raw materials of appropriate sizes into such a liquid.

Meanwhile, when a collagen having a large particle diameter is used, a thick layer is formed by a binding enzyme preparation on the surfaces to be bound. This is undesirable from the viewpoints of both taste and appearance. However, when a collagen having an average particle diameter of smaller than 600 µm is used, a sufficient binding strength can be obtained as described above. In addition, it becomes possible to form a thin, uniform layer of a binding enzyme preparation on the surfaces of an object to be bound (surfaces to be bound), whereby bound foods which are excellent in taste and appearance are obtained.

Illustrative examples of a method of preparing the collagen having the above specific particle diameter include grinding methods using a variety of grinders, a method in which a powdery collagen is once dissolved in a solvent and the resulting solution is then dried by use of a drying technique such as spray drying or the like, and the like. Further, the particle diameter of a powder can also be adjusted by a granulating technique. The method of preparing a collagen having the specific particle diameter to be used in the present invention is not limited to the above methods and may be any method capable of adjusting the particle diameter of a powder.

The present inventors obtained a plurality of collagen fractions having different particle size distributions by grinding a collagen by means of a grinder and then sieving the ground collagen. The thus prepared collagen powders were analyzed for each fraction by means of a particle size distribution meter, and an average particle diameter of each fraction was detected.

A collagen obtained by the above method and a transglutaminase were added in powdery form to small pieces of pork thigh meat (300 g) and kneaded into the meat well. Then, the mixture was stuffed in a casing tube with a folding width of 75 mm, left to stand at 5°C for 2 hours so as to cause a crosslinking reaction by the transglutaminase to proceed and then cooled to -40°C so as to stop the reaction. The frozen bound pork meat was sliced to a thickness of 9 mm and a width of 25 mm and thawed to measure the tensile strength (the results being shown in Fig. 2). The same procedure was repeated several times with the average collagen particle diameters being different. As a result, a surprising effect that a higher binding strength can be obtained by use of collagens having a smaller particle diameter, was observed. Further, a practical binding strength was observed by use of a collagen having an average particle diameter of smaller than 600 µm, and a sufficiently high binding strength was obtained by use of a collagen having an average particle diameter of smaller than 400 µm.

Further, the collagens according to the present invention are generally obtained by purifying collagens extracted from the tissues of animals, fishes or seafoods and are not particularly limited in terms of the degree of denaturation such as decomposition or the like. It is common that the collagens exhibit a wide range of molecular weight distribution since the collagens are hydrolyzed to various degrees during the extraction step, and those changed into so-called gelatins are also included in the collagens of the present invention.

In addition, the collagens may not have to be purified products, and it is needless to say that they may contain fats, carbohydrates, peptides, amino acids and the like in such amounts that do not impair the desired effects of the present invention.

Meanwhile, Japanese Patent Application Laid-Open (Kokai) No. 227228/1995 discloses techniques about a novel gelling raw material comprising a dried gelatin separated from a seafood and a transglutaminase and a production method thereof. This gelling raw material indicates that a gel with high thermal stability is quickly formed by combining a transglutaminase with a gelatin derived from seafoods which is easily soluble in water over a wide temperature range. However, it must be noted that the binding function of solid food raw materials provided by the present invention cannot be estimated from the gelling capability described in the Japanese Patent Application Laid-Open (Kokai) No. 227228/1995.

To be more specific, while the purpose of the enzyme preparation for binding of the present invention is to bind solid food materials, the purpose of the gelling raw materials described in Japanese Patent Application Laid-Open (Kokai) No. 227228/1995 is to produce a gelled food by being mixed with water or a liquid food. Binding according to the present invention means purposive conveyance of stress through close contact at an interface ("Binding Handbook 3^{rd} Edition", published in 1996 by Nikkan Kougyo Shinbun-Sha), that is, a state of two surfaces bound to each other by chemical or/and physical force(s) via an adhesive. Meanwhile, the gelation used in Japanese Patent Application Laid-Open (Kokai) No. 227228/1995 refers to the transformation of sol to gel ("Biochemistry Dictionary 2^{nd} Edition", published in 1990 by Tokyo Kagaku Dojin) and means the solidification of a flowable suspension or solution to the extent that it is no longer flowable and does not collapse by its own weight. Thus, binding and gelation are not synonymous with each other and are completely different phenomena by definition. Therefore, the enzyme preparation for binding of the present invention and the gelling raw material disclosed in Japanese Patent Application Laid-Open (Kokai) No. 227228/1995 are inventions which have different objects to achieve and are different in fundamental technical principle.

Further, it is obvious that there is no correlation between the properties (including breaking strength, 4 mm stress, and torque described in Japanese Patent Application Laid-Open (Kokai) No. 227228/1995) of gels obtained by reacting a transglutaminase with a variety of proteins and the binding strength. For example, no correlation is observed between the hardness (4 mm stress measured under the conditions of a plunger by "Texture Analyzer" ex Stable Micro Systems Co., Ltd. : 15 mm cylinder and a rate of 10 mm/sec) of a protein gel formed by adding a transglutaminase and the result of a pork binding test (testing method being described later on in detail in Example 1) using the same protein and a transglutaminase. More specifically, the 4 mm stresses of the gels formed by adding 100 units of a transglutaminase per 1 gram of protein to the solutions of proteins which are known to form a gel quickly by a transglutaminase, i.e., sodium caseinate, a soy protein isolate, a gelatin and a water-soluble gelatin, were 65.5 g, 66.8 g, 643.9 g and 383.9 g, respectively. Meanwhile, the tensile strength thereof showing binding capabilities were 80.0 g/cm², 25.0 g/cm², 46.6 g/cm² and 30.0 g/cm², respectively. When tensile strength of at least 80.0 g/cm² is considered a practical binding strength, the binding capabilities of the proteins other than sodium caseinate are very low. From these results, it is understood that there is no correlation between the hardness (4 mm stress) of a gel and a binding capability (tensile strength).

In short, not all proteins which form a hard gel by a transglutaminase make mutual binding of solid food materials possible. The above Japanese Patent Application Laid-Open (Kokai) No. 227228/1995 describes that a dried gelatin derived from a seafood forms, with a transglutaminase, a gel having a large torque which is one of the indexes reflecting the hardness of a gel. However, as has been described above, any correlation cannot be found between the formation of a gel having a large torque and the mutual binding of solid food materials.

Further, Japanese Patent Application Laid-Open (Kokai) No. 227228/1995 also describes that a gelatin derived from a seafood is easily soluble in water, which results in that a gel having a large torque is quickly formed. However, it is also a fact that no correlation is observed between the fact that a protein serving as a reaction substrate with a transglutaminase is easily soluble in water and the fact that biding is possible.

For example, a practical binding strength cannot be obtained with a soy protein isolate even if the soy protein isolate which is easily soluble in water is reacted with a transglutaminase, as can be seen from the above results. Further, gelatins (so-called water-soluble gelatins) which are easily soluble in water over a wide temperature range are generally commercially available. These are prepared by denaturing or decomposing collagens. Even if the pork binding test is conducted by use of these water-soluble gelatins, sufficient binding is not observed as has been described above. That is, no correlation is observed between the easy solubility of a protein in water and the binding of food raw materials.

Thus, again, just from the fact that a thermally stable gel is formed quickly by combining the gelatin described in Japanese Patent Application Laid-Open (Kokai) No. 227228/1995 which is easily soluble in water over a wide temperature range and derived from a seafood, with a transglutaminase, it is obviously not easy to estimate the binding capabilities of solid food materials, and therefore, the present invention clearly has an inventive step with respect thereto.

As has been described above, collagens according to the present invention are originally extracted from the tissues of animals, fishes and seafoods and are not limited to a particular degree of denaturation such as decomposition or the like. However, those containing 50% or more of fractions whose molecular weight is of not lower than about 65,000, are preferred.

This is because a binding effect diminishes when the molecular weight is too small. This is assumed to be because as the molecular weight becomes smaller, the reactivity with a transglutaminase is expected to be lowered, so that the affinity of the collagen with the surfaces to be bound is assumed to be lowered.

In this connection, the following method can be used as a method for measuring the molecular weight of a collagen to be used according to the present invention. That is, a method of fractionating proteins according to molecular weights by a molecular sieve effect, such as a gel filtration method or an SDS-polyacrylamide electrophoresis method, can be used. Further, a method of measuring the molecular weight of a protein according to the relationship between an electric charge and a mass, such as mass spectrometry, can be used. The molecular weight of a fractionated protein can be estimated by comparing the molecular weight with a commercially available molecular weight marker.

Next, the enzyme preparation for binding solid food materials according to the present invention will be described.

The mixed ratio of a transglutaminase and a collagen which are essential or indispensable ingredients of the enzyme preparation for binding of the present invention are not particularly limited. However, the content of the collagen is generally preferred 10 to 80 parts by weight out of 100 parts by weight of the enzyme preparation, and the content of the transglutaminase is 10 to 300 units per 1 gram of the enzyme preparation.

Incidentally, in the gelling raw material described in Japanese Patent Application Laid-Open (Kokai) No. 227228/1995, the preferred content of a transglutaminase is defined as 0.005 to 0.1% which is defined lower than that in the present invention. Thus, a gelling raw material having the preferred transglutaminase content (0.1%) defined in that Japanese Patent Application Laid-Open (Kokai) No. 227228/1995 was prepared, and it was checked whether the binding of solid food materials could be accomplished by use of the gelling raw material (refer to Example 1 for the testing method). As a result, the binding strength was, when the gelling raw material was used, 11 g/cm², indicating that sufficient binding strength was not observed, and the binding strength was further lowered when the resulting bound pieces of meat was heated. Therefore, the gelling raw material described in Japanese Patent Application Laid-Open (Kokai) No. 227228/1995 has no binding capability and is different from the enzyme preparation for binding of the present invention, from the viewpoint of functions.

Further, the transglutaminase and the collagen of the enzyme preparation for binding of the present invention do not have to be blended in the same container, and the inventive preparation includes those in the so-called "kit" form in which the two constituents are stored in a pair of separate containers.

The enzyme preparation for binding of the present invention which comprises a transglutaminase and a collagen as active ingredients may also contain the following various other components which are commonly used in this field. For example, lactose, sucrose, maltitol, sorbitol, dextrin, branched dextrin, cyclodextrin, starches, polysaccharides, gums and pectin and the like, which are known as food excipients, can be contained in the inventive enzyme preparation. Further, the enzyme preparation for binding of the present invention may also contain proteins other than caseins, such as animal proteins extracted from animal meats such as pork and beef and poultry, and vegetable proteins such as soybean protein and wheat protein, and the like. In addition, the present enzyme preparation may also contain physiologically acceptable inorganic salts such as baking soda, sodium citrate, sodium phosphate, sodium chloride, potassium chloride, and the like, as required. Furthermore, the present enzyme preparation may also contain seasonings, sugar, spices, a colorant, a color developer, ascorbic acid, organic salts such as the salts of ascorbic acid, an emulsifier, fats and oils, and the like, as required.

Next, a method for producing a bound food by use of the enzyme preparation for binding of the present invention will be described.

To produce a bound food by binding solid food materials, the enzyme preparation is used in the following manners. That is, an enzyme preparation comprising a transglutaminase and a collagen as the active ingredients is first dissolved in water or a liquid material and then added to and mixed into solid food materials. Alternatively, the powdery enzyme preparation may, as it is, be added to the solid food materials. Alternatively, a preparation comprising a transglutaminase as the active ingredient and a preparation comprising a collagen as the active ingredient are as they are, or after first dissolved so as to prepare a solution of each of the two, added to and mixed into food raw materials independently or simultaneously in the solution or the powdery form. Any of these manners are included within the scope of the method for producing a bound food according to the present invention.

Whichever method is used, the amount to be added (used) of a transglutaminase is 0.01 to 100 units, preferably 0.1 to 50 units, per 1 gram of the solid food materials to be bound. Meanwhile, the amount to be added (used) of a collagen is usually 0.1 to 5 parts by weight, preferably 0.3 to 2 parts by weight, per 100 parts by weight of the solid food materials. When the amount to be added of a collagen is too small, the binding effect obtained is not different from the binding effect obtained when a transglutaminase is only used, while when the amount is too large, a protein film is formed between the food materials, which is undesirable from the viewpoints of both food-texture and binding strength. However, the above amounts to be added of both active ingredients are merely measures, and are not necessarily limited to these measures as long as the desired effects of the present invention are achieved.

Incidentally, the gelling raw material described in the foregoing Japanese Patent Application Laid-Open (Kokai) No. 227228/1995 is used by first dissolving the gelling raw material in water or a liquid material to obtain a sol mixture and then forming the sol into a gelled food by the action of a transglutaminase. As compared therewith, an embodiment of the inventive method wherein a powdery enzyme preparation for binding of the present invention is added directly to solid food materials may be differentiated from the invention of Japanese Patent Application Laid-Open (Kokai) No. 227228/1995 in that a bound food is obtained by avoiding a sol state intentionally. The binding strength obtained by such a method using the enzyme preparation for binding of the present invention in the powdery form is higher than the binding strength obtained by a method comprising the steps of dissolving the enzyme preparation for binding in a solvent and then adding the solution to solid food materials. Thus, the method using the powdery enzyme preparation is a more useful production method of a bound food.

A mixture of a transglutaminase, a collagen and solid food materials is kept at a temperature (reaction temperature) where the enzymatic action of a transglutaminase is exhibited. The reaction temperature is generally about 3 to 60°C. When the mixture is kept at this temperature, a crosslinking reaction proceeds in about 1 minute to about 48 hours. However, the crosslinking reaction is preferably carried out at about 5 to 50°C for about 5 minutes to about 24 hours. This crosslinking reaction causes crosslinks between the collagen and (the surfaces of) the solid food materials, and eventually the solid food materials are bound to each other via the collagen.

Finally, the solid food materials to be used according to the present invention will be described.

The solid food materials refer to non-flowable materials which can retain certain forms by themselves. Examples thereof include not only the so-called meats such as beef, pork, horse meat, mutton, goat meat, domestic hare meat, chicken, and the like, but also various kinds of fish meat, shellfishes, crustaceas such as shrimps, crabs, and the like, mollusks such as squids, octopuses and the like, and fish roes such as salmon roes, salted salmon roes and the like. In addition, processed foods such as cheeses, noodles, steamed fish pastes, and the like, can also be used. However, the solid food materials are not limited to those enumerated above, and any solid food materials can be used as the solid food materials to be used according to the present invention as long as the objects or effects of the present invention are achieved.

Further, a fish gelatin to be used according to the present invention has such a characteristic that high binding strength can be obtained very quickly by being added with an adequate amount of water. Thus, when a high pressure cannot be applied at the time of binding from the viewpoint of production steps or due to the characteristic of the solid food materials that they have nonuniform shapes, are brittle, and the like, the method of the present invention makes quick binding possible by its high binding strength without a pressure being applied. As has been described above, the method of the present invention can be applied to all solid food materials. However, significant effects are observed particularly when the method of the present invention is applied to the binding of animal meats or fish meats. Above all, more significant effects are exhibited when the inventive method is used for binding of fish meats and the like which are brittle solid food materials.

### BRIEF DESCRIPTION OF DRAWINGS

Fig. 1 shows the tensile strength of bound meats made by using various kinds of gelatins.
   A: A pig-originated gelatin "Gelatin AP-100" (trade name), ex Nitta gelatin Co., Japan.
   B: A pig-originated gelatin "Gelatin AE" (trade name), ex Nitta Gelatin Co., Japan.
   C: A pig-originated gelatin "Gelatin R" (trade name), ex Nitta Gelatin Co., Japan.
   D: A fish-originated gelatin "Norland HMW Fish Gelatin" (trade name), ex Norland Products Inc.
   E: A salmon skin-originated gelatin (trial product) .
Fig. 2 shows the tensile strength of bound meats made by using collagens having different particle sizes.
Fig. 3 shows the tensile strength of bound meats made by using various proteins (Example 1).
   1. "Norland HMW Fish Gelatin" + Transglutaminase
   2. "SCANPRO T-95" + Transglutaminase
   3. Sodium caseinate + Transglutaminase
   4. "Norland HMW Fish Gelatin" alone
Fig. 4 shows the tensile strength of bound meats made by using various types of enzyme preparations in the paste-like states obtained by dissolving enzyme preparations into water.
Fig. 5 shows the tensile strength of bound meats made by using the powdery enzyme preparations as they are, i.e., in the powder forms (Example 5).

### BEST MODE FOR CARRYING OUT THE ENVENTION

The present invention will be described below in greater detail with reference to Examples. However, the technical scope of the present invention shall not be limited thereto.

### Example 1: Production of Bound Meat with Transglutaminase and Collagen

As the transglutaminase, a commercially available transglutaminase "ACTIVA TG" (product of AJINOMOTO CO., INC., specific activity: 1,000 units/g) originated from a Streptoverticillium (Streptoverticillium mobaraense F013819) was used. On the other hand, as the collagen, "Norland HMW Fish Gelatin" (trade name) which was a fish gelatin manufactured by Norland Products Inc. in the U.S.A. was used. As a result of the above-described amino acid composition analysis, that "Norland HMW Fish Gelatin" had an imino acid content of 15.7%.

1.8 g of the collagen was dissolved in 10 ml of water of about 20°C. To the resulting solution was then added 300 g of small pieces (about 2 cm cubed) of pork thigh, and the mixture was mixed so well that the solution was allowed to be fully spread on the surfaces of the meat pieces. Thereto was then added a solution obtained by dissolving 180 units of the transglutaminase in a small amount of water (2 ml), and the collagen (solution), the meat pieces and the transglutaminase (solution) were mixed well so that they formed a uniform mixture (0.6 units of the transglutaminase and 0.006 g of the collagen per 1 gram of the meat).

Then, the resulting mixture was filled in a casing tube with a folding width of 75 mm and left to stand at 5°C for 2 hours whereby the enzymatic action of the transglutaminase was allowed to proceed. After left to stand, the mixture was put in a freezer at -40°C so as to keep it frozen until evaluation. As controls, further three kinds of bound pork were prepared by repeating the foregoing procedures except that a collagen "SCANPRO T-95" (trade name) manufactured by Protein Foods A/S Co., Ltd. disclosed in Japanese Patent Application Laid-Open (Kokai) No. 070961/1998 was used in place of the collagen, that sodium caseinate was used in place of the collagen, or that the collagen was only used without adding any transglutaminase (the following Table 2). In the "SCANPRO T-95" case, the amount of water in which the collagen was to be dissolved was 12.6 ml to facilitate dispersion (7 parts by weight of water per 1 part by weight of the collagen), in accordance with the previously cited Japanese Patent Application Laid-Open (Kokai) No. 070961/1998, and bound pork was prepared in the same manner. As a result of the above-described amino acid composition analysis, "SCANPRO T-95" had an imino acid content of 20.5%.

**Table 2**

| | |
|---|---|
| 1. | "Norland HMW Fish Gelatin" + Transglutaminase |
| 2. | "SCANPRO T-95" + Transglutaminase |
| 3. | Sodium caseinate + Transglutaminase |
| 4. | "Norland HMV1/ Fish Gelatin" alone |

The frozen bound pork loaf was sliced to a thickness of 9 mm and a width of 25 mm. After the slices were thawed, the tensile strengths thereof were measured. Further, both surfaces of the slices were grilled on a hot plate so as to conduct a sensory test.

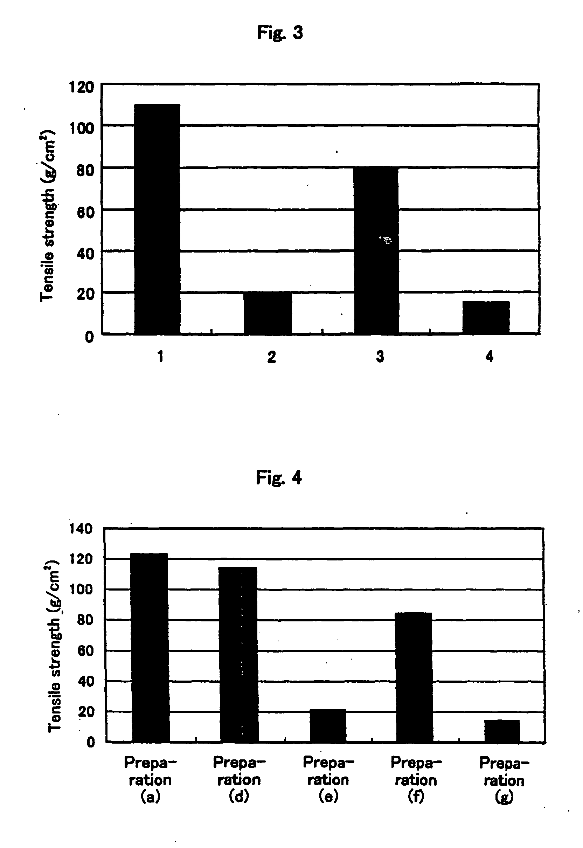

The results will be shown in Fig. 3. As is understood from Fig. 3, the tensile strength of the bound pork was, when the collagen "Norland HMW Fish Gelatin" having an imino acid content of 15.7% was used, 110 g/cm², indicating a sufficiently practical and storong binding. Although a practical adhesion of 80 g/cm² was obtained in binding with the sodium caseinate as has been conventionally known, higher binding strength was obtained when the collagen was used. In contrast, in binding with "SCANPRO T-95" and the transglutaminase and in binding with the collagen alone, practical binding was not observed between pieces of the meat. According to the above-mentioned Japanese Patent Application Laid-Open (Kokai) No. 070961/1998, since "SCANPRO T-95" shows dispersibility by use of cold water, it can be said that no' adhesive properties are exhibited when water of 20°C is used as in the above procedures of the present invention and therefore, that control of the temperature of water makes operations complicated. Meanwhile, when the collagen is used, binding is possible, and high binding strength can be obtained, without any particular need to control the temperature of water as long as water of ordinary temperature (15 to 25°C) is used.

Further, when grilled, the bound food of the present invention did not undergo separation of the solid food materials (pieces of meat) at the bound interfaces, gave natural texture and gave as good taste and flavor as fresh meat.

### Example 2: Preparation of Enzyme Preparations for Binding

Seven(7) kinds of the inventive enzyme preparation for binding and to be used in the following Examples 3 and 4 were prepared by mixing the ingredients in the ratios shown in the following Table 3. Incidentally, the transglutaminase used was the same as in Example 1.

**Table 3**

| | | | |
|---|---|---|---|
| | Recipe | Amounts mixed | Imino acid content |
| a) | "Norland HMW Fish Gelatin" | 60 units | 15.7 % |
| | Lactose | 40 g | |
| | Transglutaminase | 6,000 units | |
| b) | Salmon skin-originated collagen (trial product) | 60 g | 16.9 % |
| | Lactose | 40 g | |
| | Transglutaminase | 6,000 units | |
| c) | "Gelatin AP100" | 60g | 21.7% |
| | Lactose | 40 g | |
| | Transglutaminase | 6,000 units | |
| d) | "Gelatin AP100" | 30g | 18.7% |
| | "Norland HMW Fish Gelatin" | 30 g | |
| | Lactose | 40 g | |
| | Transglutaminase | 6,000 units | |
| e) | "SCANPRO T-95" | 60 g | 20.5% |
| | Lactose | 40 g | |
| | Transglutaminase | 6,000 units | |
| f) | Sodium Caseinate | 60 g | - |
| | Lactose | 40 g | |
| | Transglutaminase | 6,000 units | |
| g) | "Norland HMW Fish Gelatin" | 60 g | 15.7% |
| | Lactose | 40 g | |

### Example 3: Production of Bound Meat Using Enzyme Preparation for Binding (Part 1)

A 3-gram portion was taken from each of the 5 types of enzyme preparations for binding (a), (d), (e), (f) and (g) prepared in Example 2, and water (20°C) was added to each of the portions in an amount of four times the weight of each portion so as to disperse each portion therein, whereby 5 types of paste-like mass were prepared. By use of these pastes as binders,' bound meats were prepared.

That is, each of these pastes was added to 300 g of small pieces (about 2 cm cubed) of pork thigh, and the mixture was mixed so well that the paste was allowed to be fully spread on the surfaces of the meat pieces. Then, each resulting mixture was filled in a casing tube with a folding width of 75 mm and left to stand at 5°C for 2 hours whereby the crosslinking reaction by the transglutaminase was allowed to proceed. After left to stand for two hours, the mixtures were put in a freezer at -40°C so as to keep them frozen until evaluation.

After stored in the frozen state for one day, each of the bound pork loaves was sliced to a thickness of 9 mm and a width of 25 mm. After the slices were thawed, the tensile strength thereof was measured in the raw state. Further, both surfaces of the slices were grilled on a hot plate, followed by conducting a sensory test.

The results will be shown in Fig. 4. As may be understood from Fig. 4, for the enzyme preparations for binding (a) and (d) comprising a collagen having an imino acid content of lower than 20% and a transglutaminase as the active ingredients, high binding strengths of as much as 123 g/cm² and as much as 114 g/cm² were observed, respectively. Further, although practical binding strength of 84 g/cm² was observed for the preparation (f) using sodium caseinate and a transglutaminase, the binding strength was not so high as that observed when the collagen was used according to the present invention. Meanwhile, for the preparation (e) using a collagen having an imino acid content of higher than 20% and a transglutaminase, and the preparation (g) using a collagen having an imino acid content of lower than 20% and containing no transglutaminase, practical binding strength was not obtained.

Further, when grilled, the bound pork made by using the enzyme preparation for binding of the present invention did not undergo separation of the bound small pieces of pork at their bound interfaces, gave natural texture and gave as good taste and flavor as fresh meat.

### Example 4: Production of Bound Meat Using Enzyme Preparation for Binding (Part 2)

Each of the seven types of enzyme preparations for binding (a) to (g) prepared in Example 2 was applied uniformly on one surface of small pieces of beef thigh cut to a size of about 2 cm cubed. Then, two small pieces of meat were brought into contact with each other at the surfaces where the same enzyme preparation was applied, stuffed in a polyethylene bag and then press-contacted with each other with a vacuum sealer. After the vacuum sealed small pieces of meat were left to stand at 5°C for 2 hours whereby the crosslinking reaction by the transglutaminase was allowed to proceed, followed by measuring the tensile strength thereof.

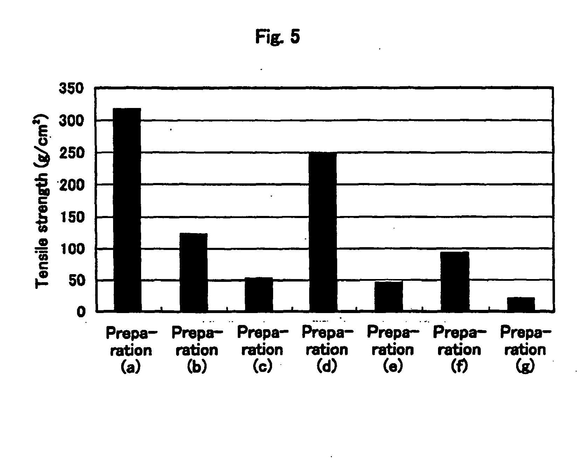

The results will be shown in Fig. 5. As may be understood from Fig. 5, when a collagen (gelatin) having an imino acid content of lower than 20% was used as the protein (the cases of preparations (a), (b) and (d)), higher binding strength was observed than that observed when sodium caseinate was used (the case of preparation (f)). Particularly, when the preparations (a) and (d) were used; surprisingly high binding strength was observed. Meanwhile, when a collagen having an imino acid content of higher than 20% was used (the cases of preparations (c) and (e)) and when the preparation using a collagen having an imino acid content of lower than 20% and containing no transglutaminase was used (the case of preparation (g)), practical binding strength was not obtained.

### INDUSTRIAL APPLICABILITY

While a conventional method of binding solid food materials by using a transglutaminase and a collagen requires dispersion of the collagen in cold water and quick operations, the present invention has made it possible to bind solid food materials by a simple method requiring no control of the temperature of water. Further, the binding strength achieved thereby is not only significantly higher than the binding strength obtained when a conventional collagen is used but also equal to or higher than the binding strength obtained when casein which has heretofore been known as a binder is used, and the bound food obtained has a good taste and flavor. By use of the present invention, bound foods produced from solid food materials by a simple method can be provided to consumers who cannot take in caseins due to milk allergy or the like.

## Claims

1. An enzyme preparation for binding solid food materials which comprises, as the active ingredient, a transglutaminase, and a collagen in which the total of the residues of the hydroxyproline and proline in the collagen is less than 20% of the total of the amino acid residues in the collagen or/and a collagen having an average particle diameter of smaller than 600 µm.

2. The enzyme preparation for binding solid food materials as set forth in Claim 1 wherein said transglutaminase is contained in an amount of 10 to 300 units per 1 gram of the enzyme preparation.

3. A method for producing a bound food from solid food materials which comprises using, as the binder, a transglutaminase, and a collagen in which the total of the residues of the hydroxyproline and proline in the collagen is less than 20% of the total of the amino acid residues in the collagen or/and a collagen having an average particle diameter of smaller than 600 µm.

4. A method for producing a bound food from solid food materials which comprises causing an enzyme preparation as set forth in any one of Claim 1-2 to act on said solid food materials, wherein said enzyme preparation is, without being dissolved in water or a liquid material, added directly to said solid food materials.

5. A bound food which has been produced from solid food materials by the method as set forth in Claim 5 or 6.

## Patentansprüche

1. Enzympräparation zum Binden von festen Nahrungsmittelmaterialien, die als aktiven Bestandteil eine Transglutaminase und ein Collagen, worin die Gesamtheit der Reste des Hydroxyprolins und Prolins in dem Collagen weniger als 20 % der Gesamtheit der Aminosäurereste in dem Collagen ist, oder/und ein Collagen mit einem mittleren Teilchendurchmesser von weniger als 600 µm enthält.

2. Enzympräparation zum Binden von festen Nahrungsmittelmaterialien nach Anspruch 1, worin die Transglutaminase in einer Menge von 10 bis 300 Einheiten pro 1 g der Enzympräparation enthalten ist.

3. Verfahren zum Herstellen eines gebundenen Nahrungsmittels aus festen Nahrungsmittelmaterialien, welches die Verwendung einer Transglutaminase als Bindemittel und eines Collagens, worin die Gesamtheit der Reste des Hydroxyprolins und Prolins in dem Collagen weniger als 20 % der Gesamtheit der Aminosäurereste in dem Collagen ist, oder/und eines Collagens mit einem mittleren Teilchendurchmesser von weniger als 600 µm umfaßt.

4. Verfahren zum Herstellen eines gebundenen Nahrungsmittels aus festen Nahrungsmittelmaterialien, welches das Einwirken einer Enzympräparation nach einem der Ansprüche 1 oder 2 auf die Nahrungsmittelmaterialien umfaßt, wobei die Enzympräparation, ohne in Wasser oder einem flüssigen Material gelöst zu werden, direkt zu den festen Nahrungsmittelmaterialien gegeben wird.

5. Gebundenes Nahrungsmittel, das aus festen Nahrungsmittelmaterialien durch das Verfahren nach Anspruch 5 oder 6 hergestellt worden ist.

## Revendications

1. Préparation enzymatique pour la liaison de matières alimentaires solides, qui comprend, comme ingrédient actif, une transglutaminase, et un collagène dont le total des résidus d'hydroxyproline et de proline dans le collagène est inférieur à 20 % du total des résidus des aminoacides dans le collagène ou/et un collagène ayant un diamètre moyen des particules inférieur à 600 µm.

2. Préparation enzymatique pour la liaison de matières alimentaires solides selon la revendication 1, où ladite transglutaminase est contenue en une quantité de 10 à 300 unités pour 1 gramme de la préparation enzymatique.

3. Procédé pour la production d'un aliment lié à partir de matières alimentaires solides, qui comprend l'utilisation, comme liant, d'une transglutaminase, et d'un collagène dont le total des résidus d'hydroxyproline et de proline dans le collagène est inférieur à 20 % du total des résidus des aminoacides dans le collagène ou/et d'un collagène ayant un diamètre moyen des particules inférieur à 600 µm.

4. Procédé pour la production d'un aliment lié à partir de matières alimentaires solides, qui comprend la mise en oeuvre de l'action d'une préparation enzymatique selon l'une quelconque des revendications 1 ou 2 sur lesdites matières alimentaires solides, où ladite préparation enzymatique est, sans dissolution dans de l'eau ni une matière liquide, ajoutée directement auxdites matières alimentaires solides.

5. Aliment lié, qui a été produit à partir de matières alimentaires solides par le procédé selon la revendication 3 ou 4.
